# EUROPEAN PATENT APPLICATION

(11) **EP 3 646 968 A1**
(43) Date of publication of application: **06.05.2020**
(21) Application number: 18203405.8
(22) Date of filing: 30.10.2018
(51) Int. Cl.: B22F 3/10, B22F 3/105, B33Y 30/00, B33Y 50/02, B29C 64/393, G06N 3/04, G06N 5/00

(54) **METHOD FOR AUTOMATICALLY PREVENTING DEFECTS POTENTIALLY ARISING DURING AN ADDITIVE MANUFACTURING PROCESS AND MANUFACTURING DEVICE**

(71) Applicant: Siemens Aktiengesellschaft, 80333 München (DE)
(72) Inventor: Buggenthin, Felix, 81373 München (DE); Joblin, Mitchell, 81825 München (DE)

(57) **Abstract**

The present invention pertains to a 3D-printing method and a manufacturing device configured to execute such a method. According to the invention, each deposited material layer is examined with a sensor device. Layer data taken with the sensor device are analyzed with a defect model, which provides a prediction for potentially arising defects during the further manufacturing process. Based on a determined defect category a suitable preventive action is performed, e.g. redepositing modelling material within the last deposited material layer.

The present invention relates particularly to selective laser melting (SLM) and other powder bed fusion processes. However, the present concepts are not limited to SLM and may be applied to various other additive manufacturing methods. The solution of the present invention advantageously provides an effective automatized solution for preventing defects potentially arising during manufacture.

## Description

The present invention pertains to a method for automatically preventing defects potentially arising during an additive manufacturing process and a manufacturing device for executing such a method.

In generative or additive manufacturing processes, also commonly referred to as "3D-printing processes", one or several materials are sequentially deposited and cured or fused in layers based on a digitized geometric model of an object. Amongst various advantages, 3D printing offers the possibility to integrally form complex components in one continuous process, which otherwise - within conventional manufacturing - would necessarily require elaborate installation and/or manufacturing efforts. 3D printing provides extraordinary design freedom and hence it is widely used for manufacturing with multiple applications in engineering, construction, industrial design, the transport industry, and generally everywhere where a resource-efficient process chain is used to produce individualized components in small and large series.

In selective laser melting (SLM), which is one example for a so-called powder bed fusion process, a component is built up layer by layer from a modelling material, in particular a metal, by depositing the modelling material in powder form on a platform and melting it locally using a focused high power-density laser, resulting in a solid, integral component after cooling. The remaining and/or surrounding powder can generally serve as a static support for the part of the component built up to a specific point. In addition to laser beams, however, electron beams or other particle beams as well as focused radiation of various sorts, e.g. microwave radiation, are sometimes used for local energy input in such or similar powder bed fusion processes (also called powder bed printing).

The stability of such a process relies amongst others on having a uniform distribution of powder across a build plate, in addition to a carefully thought-out part design that prevents overheated areas. For example, structural defects may form within the printed part in case of uneven powder distribution, e.g. elevated areas of material protruding over the powder bed, which may obstruct the subsequent printing process. Hence, early identification of potential problems with the powder distribution may support a robust and reliable SLM process.

SLM machines sometimes have a camera installed that acquire images each time the powder is distributed onto the build plate (a process referred to as recoating). However, often these images are manually inspected in a time consuming and error prone process.

Recently, monitoring techniques have been increasingly suggested in order to obtain information about potential anomalies or printing defects. Often the detection methods are only applied after the component is finished in order to scrap defective components that do not comply with given requirements or specifications. However, sometimes real-time and/or online monitoring methods are suggested to obtain a detailed evaluation of the component already during the manufacturing process.

For example, prior art document Song et al., "Real Time Cr Measurement Using Optical Emission Spectroscopy during Direct Metal Deposition Process," IEEE Sensors Journal, vol. 12, no. 5, pp. 958-964, May 2012, discloses a real-time composition analysis for material characterization, defect detection, process optimization and process control of a direct metal deposition process (also known as Laser Metal Deposition). The method uses optical emission spectroscopy of plasma, which is induced by a process laser beam focused onto a metal powder.

However, none of these approaches provides a consistent strategy to prospectively identify and prevent relevant defects, problems and/or failures in an automatized way before they can even arise.

Against this background, it is an object of the present invention to find solutions for automatized prevention of defects during additive manufacturing.

This object is achieved by a method having the features of claim 1 and a manufacturing device having the features of claim 11.

According to an aspect of the invention a method for automatically preventing defects potentially arising during an additive manufacturing process comprises additively manufacturing a component by depositing and solidifying a modelling material in material layers; acquiring, during additive manufacturing, layer data of each respective last deposited material layer with a sensor device; probing each respective last deposited material layer for potentially arising defects by analyzing the layer data of at least the last deposited material layer with a defect model of the additive manufacturing process, wherein the defect model provides a prediction based on the layer data if a defect is likely to arise at a given confidence level during the further additive manufacturing, wherein a defect category is determined for any potentially arising defect; and performing a preventive action corresponding to the determined defect category comprising at least one of redepositing modelling material within the last deposited material layer, changing printer parameters of the additive manufacturing process and stopping the additive manufacturing process at least temporarily.

According to another aspect of the invention, a manufacturing device is configured to execute the method according to the invention.

One idea of the present invention is to use a predictive model to automatically identify and prevent defects in additive manufacturing devices. The present approach works without the need for manual post-inspection and labeling of powder bed images and sensor data. Instead advanced data analytics and machine learning tools may be employed so that the manufacturing machine can automatically recognize, i.e. by itself, whether a (critical and/or major) defect is going to occur in subsequent layers by analyzing the most recent history of powder bed images and sensor information acquired while printing earlier layers. To this end, the defect model may have been trained to make out indicators within the layer data pointing towards, for example, minor defects, flawed or defective areas and/or problems with the printing process, which could lead to major and/or critical defects during the further additive manufacturing if not corrected and/or treated properly. The invention thus exploits the fact that many major and/or severe defects begin as minor defects and/or flaws and develop over time to become major defects. The invention relies on the assumption that the layer data contains "early indicators" of such impending defects.

The manufacturing device may take input from the defect model, e.g. a machine learning algorithm, in order to determine what appropriate preventative action to take based on a defect category. For example, a rule engine may be utilized to make decisions based on the prediction and the prediction's confidence level. Possible preventative actions may comprise triggering a recoating/reposition of modelling material, changing printer parameters (laser power, scan speed, hatching angle, powder thickness, repositioning the build plate etc.), pausing the build and so on.

In one particular example, an inhomogeneous powder distribution could lead to elevated areas which in turn could be hit by a blade or other feeder device of a printer recoater, thus provoking a crash of the current print job. As a consequence, the print job might have to be restarted or could be lost altogether. Also, the printer could take damage in extreme cases. With the present invention however, the machine is able to correctly detect the emergence of such a hard recoater crash, e.g. by identifying small irregularities/inhomogeneities within the powder distribution and/or already existing flawed areas not net posing a problem for the printer, and thus can prevent it by initiating appropriate preventive and/or counter measures.

The present invention provides an effective automatized solution for preventing defects potentially arising during manufacture. Advantages of the invention comprise:
- the possibility of closed loop operation of 3D printers,
- increased automation requiring less manual intervention,
- improved production yield,
- higher quality parts,
- reduced scrap material,
- increased printer efficiency,
- reduced cost in acquiring valuable labelled data for machine learning algorithms not requiring the manual effort of human labelers, and
- reduced maintenance costs due to less recoater/material feeder problems.

In conventional solutions on the other hand sensor data, e.g. images, often have to be manually inspected for recoating defects after a job has been finished. This process is time consuming and error prone work since some defects are difficult to detect by eye, for example because they are represented by only a few pixels intensity variations in the image.

In general, aspects of the invention offer great advantages for 3D printing or AM technology since 3D components may be printed with minimal reject/scrap rate and without any hard crashed or defects of the 3D printer. This allows for a more efficient, material saving and time saving manufacturing process. Particularly advantageous in general is the reduction of costs, weight, lead time, part count and manufacturing complexity coming along with employing AM technology for printing various components. Moreover, the geometric and functional shape of the printed components or objects may be flexibly designed with regard to the intended technical purpose of parts or regions of the component/object.

Free form fabrication (FFF), direct manufacturing (DM), fused deposition modelling (FDM), powder bed printing (PBP), laminated object manufacturing (LOM), laser metal deposition (LMD), stereo-lithography (SL), selective laser sintering (SLS), selective laser melting (SLM), selective laser sintering (SLS), selective heat sintering (SHS), electron beam melting (EBM), direct metal laser sintering (DMSL), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D-printing without loss of generality. AM or 3D-printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries, aerospace industries, etc. Advantageous embodiments and improvements of the present invention are found in the subordinate claims.

According to an embodiment, the defect model may be trained on labeled layer data being generated during previous additive manufacturing processes having suffered a defect. The labeled layer data may comprise layer data of the respective additive manufacturing processes and corresponding defect data of the respective occurred defects.

The labeled layer data may particularly comprise layer data of several additive manufacturing processes having suffered a defect, wherein the layer data is being labeled according to which defect or failure occurred in each case. For each such failed printing process, the layer data may comprise detailed information on all material layers deposited prior to the defect or crash of the printing process. Thus, the layer data may include early indicators of the subsequent major defect, e.g. minor flaws in one or several of the deposited material layers that evolved over time into the critical defect as no proper countermeasures were conducted. The defect model is hence trained to find such early indicators within layer data of deposited material so that preventive actions may be initialized before a critical defect even occurs.

Hence, the predictive model of the invention may be trained via event log analysis of occurred defects to correctly detect the emergence of a defect, e.g. a hard recoater crash. To this end, it may be trained with a set of data that was taken from actual recoater crashes or other defects. One can thus define two distinct phases of the method, a self-learning/training phase and an error-prevention phase. In the self-learning/training phase layer data of one or many former print runs are collected and labeled according to the defect category or type. Thus, every time the manufacturing device indicates that it has experienced a defect, e.g. recoater crash, this information may be used to label corresponding layer data, e.g. camera images of the powder bed, sensor data and so on. A defect may have occurred in that case because the machine has not yet learned to recognize this failure mode from the data. The training examples may be collected in a database that is then used to train the defect model to automatically detect defects in powder bed images and other sensor data (e.g., audio, vibration, or temperature time series data). As a result, this particular defect may then be prevented in future print runs.

By analyzing the layer data the invention leverages a data source that contains "early indicators" of a defect. For many types of additive manufacturing defects, there are subtle indicators in case the process is tending towards a defect. Such a defect often begins as a minor one but eventually leads to a major defect if no action is taken. The event logs of failed print runs only identify severe defects once they have occurred, but that information is used in the present invention to teach the system to identify minor flaws and/or defects before they evolve into major defects.

According to an embodiment, the defect model may be trained by feeding the labeled layer data to a neural network representing the behavior of the additive manufacturing process.

The defect model and/or the manufacturing device may thus comprise a module for machine learning. The machine learning may be responsible for taking as input the sensor data (e.g., from a powder bed image, or sensor data in the form of time series) and a label for this data derived by processing event logs, defect data and so on. The module may thus fulfill a supervised learning task. Deep learning (neural networks) is one of several suitable technologies to perform such a learning task. Convolutional neural networks, for example, could be applied to camera images. Additionally or alternatively, recurrent neural networks may be applied to temporally resolved sensor data. Once trained, the defect model is capable of tagging previously unseen images and sensor data and automatically identifying whether there are indicators of a future defect like for example a hard recoater crash or similar.

According to an embodiment, the labeled layer data may be generated by performing sequential rule mining on log data of previous additive manufacturing processes.

The defect model and/or the manufacturing device may thus comprise a module for event processing, which is responsible for taking as input layer data and defect data, e.g. in the form of event sequences of log data, and outputting labeled layer data for event sequences that constitute a recoating or other problem. Such a module may rely on unsupervised machine learning, for example, more specifically on sequential rule mining.

Labelling of layer data may thus be performed automatically and in a closed loop. Essentially, the system may teach itself how to print more reliably as opposed to most other approaches where humans teach the machine via manually labelling the data according to their knowledge.

According to an embodiment, the layer data of several preceding deposited material layers may be analyzed collectively to probe each respective last deposited material layer for potentially arising defects.

Hence, not only the most recent history of powder bed images and sensor information may be analyzed, e.g. only the very last deposited material layer, but also additional deposited layers further back in time may contribute. For example, it is possible to utilize layer data of up to hundreds or thousands of deposited layers. However, in many applications less than 10 layers may suffice, i.e. the last one to ten deposited material layers.

According to an embodiment, the defect category may assess at least one of a type of the defect and a criticality of the defect. For example, it may be assessed if the emerging defect can be prevented at all or if it is considered terminal so that the semi-finished component has to be scrapped. In another example, it may be assessed if the problem is considered minor so that a preventive action may not even be necessary. In other cases, certain preventive actions may be sufficient in order to prevent a future fatal defect. In one particular example, it may be enough to recoat the printing platform with modelling material. The criticality of the defect may depend on the specific use case at hand. For some components stricter quality requirements may apply than for others.

According to an embodiment, the type of the defect may comprise a material deposition defect and/or a material solidification defect. Material deposition defects comprise, for example, a defective or subpar distribution of modelling material, e.g. due to problems with a position of the fabrication table and/or the material supply. Material solidification defects on the other hand comprise structural defects already existing in the printed part, e.g. elevated areas in which solid material protrudes over the component's top layer. Other solidification defects comprise thermal cracks, gas inclusions and/or fusion deficiencies of the modelling material and so on.

According to an embodiment, printer parameters changed during the preventive action may comprise energy beam power, scan speed, fabrication table position, hatching angle, material layer deposition thickness and/or modelling material type. For example, the power of a laser may be adjusted and/or the modelling material may be replaced.

According to an embodiment, the sensor device may comprise a camera, a temperature sensor, a vibration sensor, an ultrasound sensor and/or an electromagnetic radiation sensor.

In one particular example, the sensor device may be an optical camera detecting visible light. In another example the sensor device may however be configured to detect general electromagnetic radiation emitted and/or reflected from the probed material layer. Radiation is produced during typical AM processes, e.g. during SLM, and can be used for assessing the quality and/or properties of a deposited material layer. The electromagnetic radiation may comprise thermal radiation, IR radiation and/or visible light. Common systems, e.g. cameras, operate, for example, in the infrared or near-infrared range, and/or in the visual regime, e.g. optical 2D- or 3D-scanners. For example, the sensor device may comprise a pyrometer, a photodetector and/or an optical 3D-scanner, e.g. semiconductor based detectors like active-pixel sensors (e.g. CMOS technology), LEDs, photodiodes and so on. However, in other embodiments of the invention, other technologies for sensing defects may be employed as well, e.g. three-dimensional ultrasound probing of the material layers.

According to an embodiment, the additive manufacturing process may comprise a powder bed fusion process. The additive manufacturing process may particularly comprise selective laser melting, selective laser sintering, direct metal laser sintering, electron beam melting and/or selective heat sintering.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
- Fig. 1: shows a schematic flow diagram of a method for automatically preventing defects potentially arising during an additive manufacturing process according to an embodiment of the invention.
- Fig. 2: shows a manufacturing device for executing the method of Fig. 1.
- Fig. 3: shows a schematic flow diagram for training a defect model used in the method of Fig. 1.
- Fig. 4: shows another schematic flow diagram of the method from Fig. 1.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

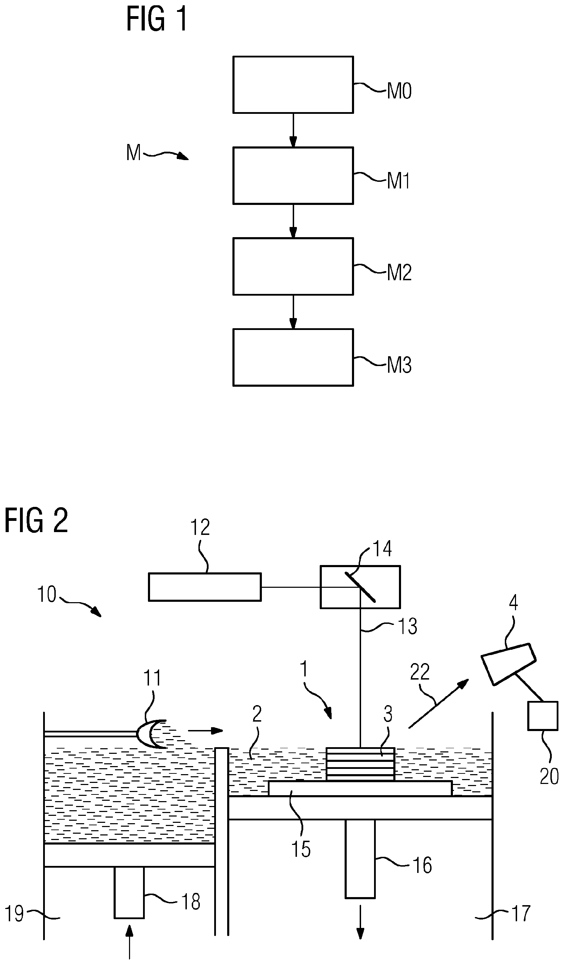

Figure 1 shows a schematic flow diagram of a method M for automatically preventing defects 9 potentially arising during an additive manufacturing process according to an embodiment of the invention. Fig. 2 shows a manufacturing device 10 for executing the method M of Fig. 1.

The 3D-printing method M may be used for the additive production of a component 1 from a modelling material 2. To this end, the method M comprises under M0 additively manufacturing the component 1 by depositing and solidifying a modelling material 2 in material layers 3. This step may particularly comprise liquefying or melting the deposited modelling material 2. However, in other embodiments the modelling material 2 may already be deposited in a fluid or flowable condition. The basic AM process may be, for example, a selective laser melting (SLM) process, in which the deposited modelling material 2 is melted by a continuous or pulsed laser beam 13 being focused on a localized spot on the material layer 3. This results in a molten pool or bath at the irradiated spot, which may be several material layers 3 deep and which may also melt some of the surrounding and already solidified modelling material 2. Next the laser beam 13 is moved further and the melt solidifies through cooling, whereby the last material layer 3 is fused with the material layer(s) 3 beneath.

The modelling material 2 may be selected from the group of metallic materials, metallic material combinations and metallic alloys. In one particular example, the modelling material 2 may be titanium, aluminum and/or other metal and/or an alloy or combination of these. In principle, the manufacturing device 10 may be configured for multi-component printing so that combinations of different materials may be printed at the same time. The person of skill will be readily aware that the term modelling material 2 includes such combinations of materials. The modelling material 2 may particularly be provided in powder form.

Generally, the present invention provides many possibilities to liquefy the modelling material 2 by introducing heat locally into the deposited modelling material 2. The particular embodiment of the manufacturing device 10 in Fig. 2 and the associated 3D-printing method M is based on the use of a laser beam 13 within a SLM process. Such a laser beam 13 can generate heat very precisely and in a controlled manner. In SLM, the modelling material 2 is applied in powder form on a fabrication table 15 or platform within a fabrication chamber 17. The modelling material 2 is supplied from a supply chamber 19 adjacent to the fabrication chamber 17. To this end, a powder delivery system including a material feeder 11, roller and/or recoater blade are used to deliver modelling material 2 in a stepwise fashion for each deposited layer of modelling material 2 into the fabrication 17 chamber. The modelling material 2 forms a so-called powder bed on the fabrication table 15 within the fabrication chamber 17. The modelling material 2 laying on top of the powder bed is liquefied by local laser irradiation with the laser beam 13, resulting in a solid, continuous metal component 1 after cooling. However, it is understood that alternatively or in addition to a laser beam 13, the 3D-printing method M may also use particle beams, e.g. an electron beam, and/or microwave radiation or other energy beams for liquefying the modelling material 2.

The manufacturing device 10 in Fig. 2 provides an energy source in the form of a laser 12, for example a Nd:YAG laser, a CO2 laser or the like. In Fig. 2, the laser 12 transmits the laser beam 13 selectively (i.e. locally) onto a certain part of the powder surface of the powdery modelling material 2. For this purpose, an optical deflection device or a scanner module such as a movable or tiltable mirror 14 can be provided, which deflects the laser beam 13 depending on its tilt position onto a certain part of the powder surface of the modelling material 2. At the point of impact of the laser beam 13, the modelling material 2 is heated so that the powder particles are locally melted and form an agglomerate during cooling. Depending on a digital production model provided by a CAD system ("computer-aided design"), the laser beam 13 scans the powder surface. After selective melting and local agglomeration of the powder particles in the surface material layer 3 of the modelling material 2, excess and non-agglomerated metal modelling material 2 may be removed. Then the fabrication table 15 is lowered by means of a fabrication piston 16 (see arrow in Fig. 2) and new modelling material 2 is transferred from the supply chamber 19 into the fabrication chamber 17 with the aid of the material feeder 11 or another suitable device. While the fabrication platform 15 is lowered stepwise via the fabrication piston 16 the modelling material 2 is moved upward within the supply chamber 19 by a supply piston 18 so that the material feeder 11 may move new modelling material 2 into the fabrication chamber 17. Within the fabrication chamber 17, the modelling material 2 may be preheated by infrared light or similar means to a working temperature just below the melting temperature of the modelling material 2 to accelerate the melting process.

In this way, a three-dimensional sintered or "printed" metal component 1 is created from agglomerated modelling material 2 in an iterative generative build-up process, in which the surrounding powdery metal modelling material 2 can serve to support the part of metal component 1 that has been built up to then. Due to the continuous downward movement of the fabrication table 15 the metal component 1 is manufactured in layered model generation.

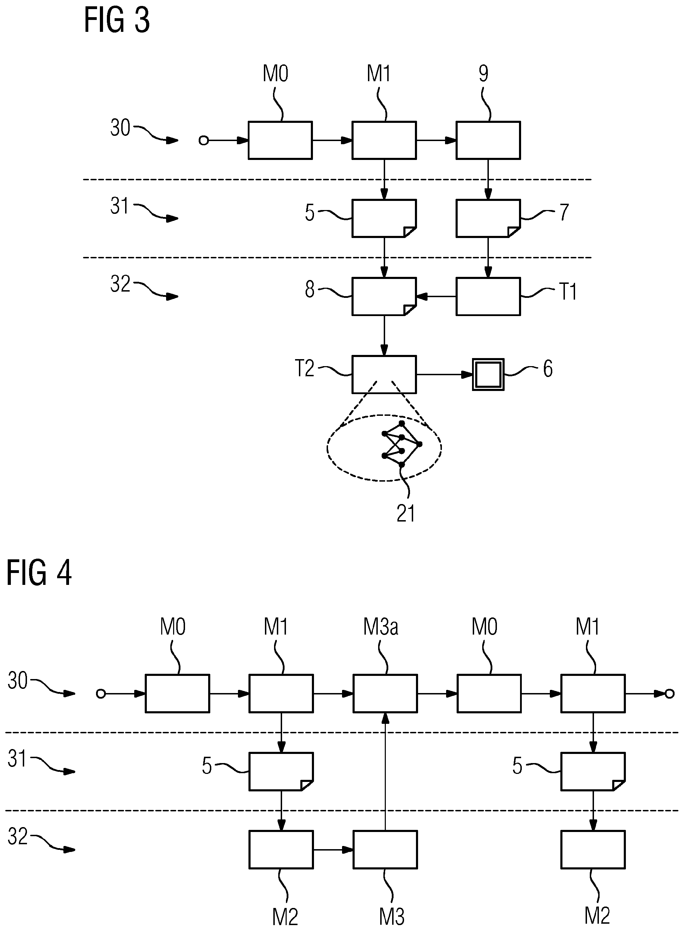

Still referring to Figs. 1 and 2, the method M further comprises under M1 acquiring layer data 5 of each respective last deposited material layer 3 with a sensor device 4 (cf. Figs. 3 and 4). The sensor device 4 may be, for example, an electromagnetic radiation sensor configured to detect electromagnetic radiation 22 emitted from a surface of the component 1 during the building process. However, in other embodiments the sensor device 4 may comprise a camera, a temperature sensor, a vibration sensor, an ultrasound sensor and so on. The acquired layer data 5 are transferred from the sensor device 4 to a control device 20 of the manufacturing device 10. The control device 20 is communicatively coupled to the sensor device 4 and configured to control the manufacturing device 10.

The method M further comprises under M2 probing each respective last deposited material layer 3 for potentially arising defects 9 by analyzing the layer data 5 of the last few, e.g. the last ten, deposited material layers 2 with a defect model 6 of the additive manufacturing process. The analysis may be performed, for example, by the control device 20. The defect model 6 provides a prediction based on the layer data 5 if a defect 9 is likely to arise at a given confidence level during the further additive manufacturing. For any potentially arising defect a defect category is determined 9 by the control device 20. The defect category assesses a type of the defect 9, e.g. if it is a material deposition defect and/or a material solidification defect, as well as a criticality of the defect 9. For example, the criticality of the defect 9 may be minor so that no further action is needed. In another example, the criticality of the defect 9 may be terminal and non-preventable and/or non-repairable so that the AM process is immediately stopped. In another example, the criticality of the defect 9 may require preventive action as it will be explained in the following.

Still referring to Figs. 1 and 2, the method M further comprises under M3 performing a preventive action corresponding to the determined defect category. A preventive action may be, for example, redepositing M3a modelling material 2 within the last deposited material layer 3, e.g. in case the modelling material 2 was not distributed properly during the last recoating step. However, alternatively or additionally, a preventive action may also comprise changing printer parameters of the additive manufacturing process including but not limited to energy beam power, scan speed, fabrication table position, hatching angle, material layer deposition thickness and modelling material type. As another preventive action, the additive manufacturing process may be paused at least temporarily, e.g. in case a critical defect requiring manual intervention is about to emerge, or because the modelling material 2 has to be replaced etc.

Fig. 3 shows a schematic flow diagram for training the defect model 6 used in the method M of Fig. 1. In this case, the manufacturing device 10 has not yet learned to interpret the indicators of a particular failure/defect 9 as will be described in the following. The figure is divided into a machine level 30 in the first row, a (raw) data level 31 in the second row and a machine learning/model level 32 in the third row. The manufacturing method M is executed as described above by repeating the basic steps under M0 and M1 of depositing and solidifying the modelling material 2 in material layers 3 as well as acquiring layer data 5 (images and other sensor data) for each deposited material layer 3 until a defect 9 occurs, in which case the printing is stopped. The defect 9 may be, for example, a hard crash of the material feeder 11 as it hits a protruding element originally stemming from unequally deposited modelling material 2. This can happen as missing powder in certain areas may cause the laser beam 13 to introduce defects that deform the component 1. The deformed component 1 is thicker in certain regions which causes the material feeder 11 to hit these regions during one of the next recoatings. At this point, the machine has not yet learned how to interpret the layer data 5 with respect to failures/defects 9, even though the data contains indicators that the modelling material 2 was not spread properly, and thus cannot prevent the defect 9. When the manufacturing device 10 "crashes" a number of log events are produced including information about the occurred defect 9, which are summarized as defect data 7 in Fig. 3. These log events include information about the control device 20 responsible for controlling the material feeder 11, along with diagnostic information and information that indicates the machine has stopped operating. These events are then processed under T1 by an event processing engine that uses rules to classify the failure mode according to the event sequence observed (e.g. employing sequential rule mining). The failure mode is then used to label the layer data 5 with a defect category. These labeled layer data 8 are then used under T2 to train the defect model 6 by feeding the labeled layer data 8 to a neural network 22 representing the behavior of the additive manufacturing process. Here, the labeled layer data 8 contain early indicators of the defect that occurred after no action was taken to correct the problem.

Fig. 4 shows another schematic flow diagram of the method from Fig. 1, which demonstrates the use of the trained defect model 6.

Now the manufacturing device 10, i.e. the control device 20, has learned to identify the specific failure scenario that resulted in a crash in Fig. 3, e.g. by identifying the early indicators of the respective failure scenario. The acquired layer data 5 are passed to the trained model 6 under M2, which then may identify the layer data 5 as containing a defective recoating (in the example from above) in case such a defect is about to occur again. The defective recoating is however now prevented by triggering the manufacturing device 10 to perform a recoating under M3a to correct for inhomogeneous powder distribution (one of many possible preventive actions M3). Once the second recoating is completed, new layer data 5 is acquired and checked for emerging defects. This time however, due to the preventive action, no defects are found and the machine can continue operating as normal (right side of Fig. 4). Hence, the method M may then be iterated with additional material layers 3 until the component 1 is finished or until another defect 9 is about to emerge.

Defects 9 are thus prevented in-situ in an automatized way during the manufacture of the component 1. Consequently, the scrap rate of defective components 1 may be significantly reduced. In the above scenario no manual intervention is necessary. However, in other scenarios, if the machine cannot self-correct, the preventive action could be to pause the building process at least temporarily. At this point a technician may perform other corrective actions or choose to terminate the build.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

## Claims

1. A method (M) for automatically preventing defects (9) potentially arising during an additive manufacturing process, the method (M) comprising:
additively manufacturing (M0) a component (1) by depositing and solidifying a modelling material (2) in material layers (3);
acquiring (M1), during additive manufacturing, layer data (5) of each respective last deposited material layer (3) with a sensor device (4);
probing (M2) each respective last deposited material layer (3) for potentially arising defects (9) by analyzing the layer data (5) of at least the last deposited material layer (3) with a defect model (6) of the additive manufacturing process, wherein the defect model (6) provides a prediction based on the layer data (5) if a defect (9) is likely to arise at a given confidence level during the further additive manufacturing, wherein a defect category is determined for any potentially arising defect (9); and
performing (M3) a preventive action corresponding to the determined defect category comprising at least one of redepositing (M3a) modelling material (2) within the last deposited material layer (3), changing printer parameters of the additive manufacturing process and stopping the additive manufacturing process at least temporarily.

2. The method (M) according to claim 1, wherein the defect model (6) is trained on labeled layer data (8) being generated (T1) during previous additive manufacturing processes having suffered a defect (9), wherein the labeled layer data (8) comprise layer data (5) of the respective additive manufacturing processes and corresponding defect data (7) of the respective occurred defects (9).

3. The method (M) according to claim 2, wherein the defect model (6) is trained (T2) by feeding the labeled layer data (8) to a neural network (21) representing the behavior of the additive manufacturing process.

4. The method (M) according to claim 2 or 3, wherein the labeled layer data (8) is generated (T1) by performing sequential rule mining on log data of previous additive manufacturing processes.

5. The method (M) according to one of the claims 1 to 4, wherein the layer data (5) of several preceding deposited material layers (3) is analyzed collectively to probe each respective last deposited material layer (3) for potentially arising defects.

6. The method (M) according to one of the claims 1 to 5, wherein the defect category assesses at least one of a type of the defect (9) and a criticality of the defect (9).

7. The method (M) according to claim 6, wherein the type of the defect (9) comprises at least one of a material deposition defect and a material solidification defect.

8. The method (M) according to one of the claims 1 to 7, wherein printer parameters changed during the preventive action comprise at least one of energy beam power, scan speed, fabrication table position, hatching angle, material layer deposition thickness and modelling material type.

9. The method (M) according to one of the claims 1 to 8, wherein the sensor device (4) comprises at least one of a camera, a temperature sensor, a vibration sensor, an ultrasound sensor and an electromagnetic radiation sensor.

10. The method (M) according to one of the claims 1 to 9, wherein the additive manufacturing process comprises a powder bed fusion process, in particular at least one of selective laser melting, selective laser sintering, direct metal laser sintering, electron beam melting and selective heat sintering.

11. A manufacturing device (10) configured to execute a method (M) according to one of the claims 1 to 10.
